# EUROPÄISCHE PATENTANMELDUNG

(11) **EP 4 202 779 A1**
(43) Veröffentlichungstag der Anmeldung: **28.06.2023**
(21) Anmeldenummer: 21216234.1
(22) Anmeldetag: 21.12.2021
(51) Int. Cl.: G06N 3/08

(54) **VERFAHREN UND SYSTEM ZUR KLASSIFIKATION VON SZENARIEN EINES VIRTUELLEN TESTS SOWIE TRAININGSVERFAHREN**

(71) Anmelder: dSPACE GmbH, 33102 Paderborn (DE)
(72) Erfinder: Flake, Sven, 33102 Paderborn (DE)

(57) **Zusammenfassung**

Die Erfindung betrifft ein computerimplementiertes Verfahren und System zur Klassifikation von Szenarien eines virtuellen Tests (T), mit einem Bereitstellen (S1) eines ersten Datensatzes (DS1) von Sensordaten einer durch eine Mehrzahl fahrzeugseitiger Umfelderkennungsensoren (10a, 10b, 10c) erfassten Fahrt eines Ego-Fahrzeugs (12), einem Transformieren (S2) des ersten Datensatzes (DS1) von Sensordaten durch einen ersten Algorithmus (A1), insbesondere ein multivariates Datenanalyseverfahren, in einen datenreduzierten zweiten Datensatz (DS2) von Sensordaten, einem Anwenden (S3) eines zweiten Algorithmus (A2) maschinellen Lernens auf den datenreduzierten zweiten Datensatz (DS2) von Sensordaten zur Klassifikation von durch den zweiten Datensatz (DS2) umfassten Szenarien, und einem Ausgeben (S4) eines, eine Mehrzahl von eine Fahrzeugaktion repräsentierende Klassen (K) aufweisenden dritten Datensatzes (DS3). Die Erfindung betrifft ferner ein computerimplementiertes Verfahren zum Bereitstellen eines trainierten zweiten Algorithmus (A2) maschinellen Lernens zur Klassifikation von Szenarien eines virtuellen Tests (T) .

## Beschreibung

Die vorliegende Erfindung betrifft ein computerimplementiertes Verfahren zur Klassifikation von Szenarien eines virtuellen Tests.

Die vorliegende Erfindung betrifft des Weiteren ein computerimplementiertes Verfahren zum Bereitstellen eines trainierten zweiten Algorithmus maschinellen Lernens zur Klassifikation von Szenarien eines virtuellen Tests.

Darüber hinaus betrifft die Erfindung ein System zur Klassifikation von Szenarien eines virtuellen Tests.

### Stand der Technik

Fahrassistenzsysteme wie z.B. ein adaptiver Geschwindigkeitsregler und/oder Funktionen für das hochautomatisierte Fahren können mithilfe diverser Überprüfungsmethoden verifiziert bzw. validiert werden. Dabei können insbesondere Simulationen verwendet werden.

Zur Erstellung von Testszenarien für Simulationen ist die Durchführung von Testfahrten erforderlich. Die hierdurch gewonnenen Sensordaten werden sodann in ein logisches Szenario abstrahiert. Eingangsdaten sind dabei Rohdaten, also Sensordaten aus realen Messfahrten im Sinne von Aufzeichnungen von Radarechos, 3D-Punktewolken aus Lidarmessungen und Bilddaten. Ergebnisdaten sind simulierbare Fahrszenarien, die einerseits eine Umgebung und andererseits auch Trajektorien umfassen. Im Anschluss erfolgt eine Kategorisierung von Fahrmanövern in Gruppen.

"Szenario-Optimierung für die Absicherung von automatisierten und autonomen Fahrsystemen" (Florian Hauer, B. Holzmüller, 2019) offenbart Verfahren zur Verifikation und Validierung automatisierter und autonomer Fahrsysteme, insbesondere das Finden geeigneter Testszenarien für die virtuelle Absicherung.

Die Testmethodik sieht dabei die Adaption einer metaheuristischen Suche vor, um Szenarien zu optimieren. Hierfür muss ein passender Suchraum und eine geeignete Gütefunktion aufgestellt werden. Ausgehend von einer abstrakten Beschreibung der Funktionalität und Anwendungsfälle des Systems werden parametrisierte Szenarien abgeleitet.

Deren Parameter spannen einen Suchraum auf, aus dem die passenden Szenarien zu identifizieren sind. Das Generieren von Szenarien ist jedoch rechenintensiv. Es besteht daher ein Interesse daran, die Zahl der Generierungsvorgänge zu minimieren und auf relevante Szenarien zu beschränken. Relevante Szenarien umfassen dabei beispielsweise Szenarien, die noch nicht oder nicht in ausreichender Zahl als simulierbares Szenario verfügbar sind.

Das Generieren dieser Szenarien ist rechenintensiv. Eine Generierungszeit entspricht dabei in der Regel einer aufgezeichneten Fahrzeit. Ferner basiert ein Rechenaufwand auf einer Anzahl und Komplexität generierter Szenarien.

Aus beiden Gründen besteht ein Interesse daran, die Zahl der Generierungsvorgänge zu minimieren und auf relevante Szenarien zu beschränken. Relevante Szenarien umfassen dabei beispielsweise Szenarien, die noch nicht oder nicht in ausreichender Zahl als simulierbares Szenario verfügbar sind.

Demzufolge besteht ein Bedarf, bestehende Verfahren zur Klassifikation von Szenarien eines virtuellen Tests dahingehend zu verbessern, dass ein Identifizieren relevanter Szenarien unter Verwendung geringerer Rechenressourcen ermöglicht wird.

Es ist daher Aufgabe der Erfindung, ein effizienteres Verfahren zur Klassifikation von Szenarien eines virtuellen Tests bereitzustellen.

### Offenbarung der Erfindung

Die Aufgabe wird erfindungsgemäß durch ein computerimplementiertes Verfahren zur Klassifikation von Szenarien eines virtuellen Tests mit den Merkmalen des Patentanspruchs 1 gelöst.

Des Weiteren wird die Aufgabe erfindungsgemäß durch ein computerimplementiertes Verfahren zur Klassifikation von Szenarien eines virtuellen Tests mit den Merkmalen des Patentanspruchs 13 gelöst.

Ferner wird Aufgabe erfindungsgemäß durch ein System zur Klassifikation von Szenarien eines virtuellen Tests mit den Merkmalen des Patentanspruchs 14 gelöst.

Darüber hinaus wird die Aufgabe durch ein Computerprogramm mit Programmcode, um das erfindungsgemäße Verfahren durchzuführen, wenn das Computerprogramm auf einem Computer ausgeführt wird, mit den Merkmalen des Patentanspruchs 15 gelöst.

Die Erfindung betrifft ein computerimplementiertes Verfahren zur Klassifikation von Szenarien eines virtuellen Tests. Das Verfahren umfasst ein Bereitstellen eines ersten Datensatzes von Sensordaten einer durch eine Mehrzahl fahrzeugseitiger Umfelderkennungsensoren erfassten Fahrt eines Ego-Fahrzeugs.

Das Verfahren umfasst ferner ein Transformieren des ersten Datensatzes von Sensordaten durch einen ersten Algorithmus, insbesondere ein multivariates Datenanalyseverfahren, in einen datenreduzierten zweiten Datensatz von Sensordaten.

Darüber hinaus umfasst das Verfahren ein Anwenden eines zweiten Algorithmus maschinellen Lernens auf den datenreduzierten zweiten Datensatz von Sensordaten zur Klassifikation von durch den zweiten Datensatz umfassten Szenarien und ein Ausgeben eines, eine Mehrzahl von eine Fahrzeugaktion repräsentierende Klassen aufweisenden dritten Datensatzes.

Das Ausgeben eines, eine Mehrzahl von eine Fahrzeugaktion repräsentierende Klassen aufweisenden dritten Datensatzes bezieht sich dabei auf das durch den zweiten Algorithmus maschinellen Lernens ausgegebene Klassifikationsergebnis.

Die Erfindung betrifft des Weiteren ein computerimplementiertes Verfahren zum Bereitstellen eines trainierten zweiten Algorithmus maschinellen Lernens zur Klassifikation von Szenarien eines virtuellen Tests. Das Verfahren umfasst ein Empfangen eines, auf Basis eines ersten Datensatzes von Sensordaten einer durch eine Mehrzahl fahrzeugseitiger Umfelderkennungsensoren erfassten Fahrt eines Ego-Fahrzeugs durch einen ersten Algorithmus, insbesondere ein multivariates Datenanalyseverfahren transformierten, datenreduzierten zweiten Datensatz von Sensordaten.

Darüber hinaus umfasst das Verfahren ein Empfangen eines, eine Mehrzahl von eine Fahrzeugaktion repräsentierende Klassen aufweisenden dritten Datensatzes und ein Trainieren des zweiten Algorithmus maschinellen Lernens durch einen Optimierungsalgorithmus, welcher einen Extremwert einer Verlustfunktion zur Klassifikation von Szenarien eines virtuellen Tests berechnet.

Die Erfindung betrifft überdies ein System zur Klassifikation von Szenarien eines virtuellen Tests. Das System weist eine Mehrzahl fahrzeugseitiger Umfelderkennungsensoren zum Bereitstellen eines ersten Datensatzes von Sensordaten einer erfassten Fahrt eines Ego-Fahrzeugs auf.

Des Weiteren weist das System erste Mittel zum Transformieren des ersten Datensatzes von Sensordaten durch einen ersten Algorithmus, insbesondere ein multivariates Datenanalyseverfahren, in einen datenreduzierten zweiten Datensatz von Sensordaten auf.

Das System weist ferner zweite Mittel zum Anwenden eines zweiten Algorithmus maschinellen Lernens auf den datenreduzierten zweiten Datensatz von Sensordaten zur Klassifikation von durch den zweiten Datensatz umfassten Szenarien auf, wobei die zweiten Mittel dazu eingerichtet sind, einen, eine Mehrzahl von eine Fahrzeugaktion repräsentierende Klassen aufweisenden dritten Datensatz auszugeben.

Eine Idee der vorliegenden Erfindung ist es, auf Basis reduzierter Sensorrohdaten eine Kategorie eines gefahrenen Szenarios abzuschätzen, ohne den eigentlichen Generierungsprozess zu nutzen. Ein solcher Schätzer kann somit in vorteilhafter Weise eingesetzt werden, um im Vorfeld Rohdatensätze auszuwählen, für die eine Generierung von simulierbaren Szenarien sinnvoll sind.

Die Sensorrohdaten bestehen pro Datensatz aus sehr vielen Daten, da hier typischerweise die Daten unterschiedlicher Sensoren wie z.B. Radar, Lidar oder Kamera über eine Fahrzeit gemessen werden. Relevante Daten eines Sensors werden im Sinne des maschinellen Lernens dabei auch als Merkmal bezeichnet. Bei einem Bild ist beispielsweise jedes einzelne Pixel ein solches Merkmal. Gleichzeitig ist mit einer hohen Korrelation typischer Merkmale innerhalb der einzelnen Sensorarten zu rechnen.

Der Schätzer selbst ist aufgrund der Komplexität der Sensordaten ein nichtlinearer Schätzer in Form eines neuronalen Netzes. Das neuronale Netz wird erst basierend auf der Rohdatenreduktion trainiert und trifft die Einschätzung später ebenfalls auf Basis der Reduktion. Schnell bzw. effizient wird der Schätzer bzw. der zweite Algorithmus maschinellen Lernens durch genau diese vorherige Reduktion der Dimension der Trainingsdaten durch das multivariate Datenanalyseverfahren.

Algorithmen des maschinellen Lernens basieren darauf, dass Verfahren der Statistik verwendet werden, um eine Datenverarbeitungsanlage derart zu trainieren, dass diese eine bestimmte Aufgabe ausführen kann, ohne dass diese ursprünglich explizit hierzu programmiert wurde. Das Ziel des maschinellen Lernens besteht dabei darin, Algorithmen zu konstruieren, die aus Daten lernen und Vorhersagen treffen können. Diese Algorithmen erstellen mathematische Modelle, mit denen beispielsweise Daten klassifiziert werden können.

Der Fachmann versteht unter einem datenreduzierten Datensatz bzw. einer dimensionsreduzierten Merkmalsrepräsentation die Transformation von Daten aus einem hochdimensionalen Raum in einen niedrigdimensionalen Raum, so dass die niedrigdimensionale Darstellung bzw. Darstellung mit einer geringeren Datenmenge einige sinnvolle Eigenschaften der ursprünglichen Daten beibehält, idealerweise nahe an ihrer intrinsischen Dimension.

Die Faktorenanalyse oder Faktoranalyse ist ein Verfahren der multivariaten Statistik. Es dient dazu, aus empirischen Beobachtungen vieler verschiedener manifester Variablen (Observablen, Statistische Variablen) auf wenige zugrunde liegende latente Variablen ("Faktoren") zu schließen.

Die Korrespondenzanalyse ist ein Verfahren der multivariaten Statistik, mit dem die Beziehungen der Variablen einer Kontingenztafel graphisch repräsentiert werden. Die Spalten- und Reihenprofile einer Matrix werden dabei durch Punkte in einem Raum repräsentiert, dessen Koordinatenachsen durch die jeweiligen Merkmale gebildet werden. Sie wird auch als Hauptkomponentenanalyse mit kategorialen Daten bezeichnet.

Die Hauptkomponentenanalyse ist ein Verfahren der multivariaten Statistik. Sie strukturiert umfangreiche Datensätze durch Benutzung der Eigenvektoren der Kovarianzmatrix. Dadurch können Datensätze vereinfacht und veranschaulicht werden, indem eine Vielzahl statistischer Variablen durch eine geringere Zahl möglichst aussagekräftiger Linearkombinationen (die Hauptkomponenten) genähert wird.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass die Mehrzahl fahrzeugseitiger Umfelderkennungsensoren ein im Wesentlichen abschnittsweise gleiches Sichtfeld aufweisen, wobei ein Datensatz eines ersten Umfelderkennungsensors, ein Datensatz eines zweiten Umfelderkennungsensors und ein Datensatz eines dritten Umfelderkennungsensors zumindest ein selbes Objekt umfassen. Somit können selbe Objekte in vorteilhafter Weise gleichzeitig durch die Mehrzahl von Umfelderkennungssensoren erfasst werden.

Gemäß einer weiteren bevorzugten Weiterbildung der Erfindung ist vorgesehen, dass der erste Umfelderkennungsensor durch einen Radarsensor, der zweite Umfelderkennungsensor durch einen LiDAR-Sensor und der dritte Umfelderkennungsensor durch einen Kamerasensor ausgebildet sind.

Hindernisse auf der Straße werden beispielsweise von allen drei verwendeten Sensoren, d.h. Radar-, LiDAR- und Kamerasensoren registriert, wenn auch auf unterschiedliche Weise, nämlich durch ein Radarecho, durch die Charakteristika der Punkte in einer 3D-Punktewolke und die Darstellung in einem Bild.

Dies nutzt die vorliegende Erfindung aus, um in einem ersten Schritt die Datenmenge zu reduzieren. Dafür kommt ein multivariates Datenanalyseverfahren, insbesondere die Hauptkomponentenanalyse zum Einsatz. Hierbei werden einzelne Merkmale (etwa "Distanz zum Objekt" in der Ausprägung "Radar" und "Lidar") zu einem Merkmal ("Distanz zum Objekt" allgemein) zusammengefasst. Diese Zusammenfassung wird durch die Hauptkomponentenanalyse gelernt und muss nicht manuell durchgeführt werden.

Als Ergebnis erhält man einen stark reduzierten Datensatz, bei dem korrelierende Daten vereinfacht zusammengefasst werden. Da die Größe der einzelnen Datensätze, d.h. die Anzahl der Merkmale, für den zeitlichen Aufwand für das Trainieren von Schätzern ein ausschlaggebender Faktor ist, ermöglicht dieser Schritt ein deutlich effizienteres Anlernen eines Schätzers im zweiten Schritt.

Gemäß einer weiteren bevorzugten Weiterbildung der Erfindung ist vorgesehen, dass der erste Algorithmus ein Faktorenanalyseverfahren, ein Hauptkomponentenanalyseverfahren und/oder ein Korrespondenzanalyseverfahren durchführt. Somit kann je nach Einsatzweck ein bestmögliches Datenanalyseverfahren eingesetzt werden.

Gemäß einer weiteren bevorzugten Weiterbildung der Erfindung ist vorgesehen, dass das Hauptkomponentenanalyseverfahren korrelierende erste Merkmale der Mehrzahl fahrzeugseitiger Umfelderkennungsensoren als Linearkombination aus Werten der Mehrzahl fahrzeugseitiger Umfelderkennungsensoren zu einem einzelnen, datenreduzierten Merkmal zusammenfasst.

In einer Messfahrt fallen beispielsweise Rohdaten von Radar-, Lidar- und Kamerasensoren an. Die Merkmale, also Eingabedaten für die Szenariogenerierung aus Messdaten, sind Radarechos, Punktewolken und Bildpixel, was insgesamt eine hohe Datenmenge darstellt. Im Falle einer Hinderniserkennung spiegelt sich das Hindernis sowohl in der Art der Radarechos, in der Distanz der Punkte einer Punktewolke zum Sensor sowie in Form von Hindernissen im Videobild in Fahrtrichtung wieder.

Ein Hindernis taucht also in allen drei Sensoren auf - die Sensordaten korrelieren also im Falle einer solchen Situation.

Die Hauptkomponentenanalyse deckt solche Korrelationen auf und fasst diese drei Merkmale (mathematisch als Linearkombination aus den Werten der Radarechos, Punktewolken und Pixel) zu einem allgemeineren Merkmal zusammen. Dieses Merkmal spiegelt dann weiterhin die Information "Hindernis" wieder.

Aufgrund dieser Datenreduktion kommt das schätzende neuronale Netz in diesem Beispiel mit einem Merkmal (der Linearkombination) anstelle von drei Merkmalen (Radarechodaten, Punktewolken und Pixel) aus, um trainiert zu werden und um Entscheidungen zu treffen. Da im Regelfall mindestens zwei Sensoren korrelierende Informationen liefern, ist mit einer hohen Reduktionsrate zu rechnen.

Gemäß einer weiteren bevorzugten Weiterbildung der Erfindung ist vorgesehen, dass der zweite Algorithmus maschinellen Lernens durch ein künstliches neuronales Netz gebildet ist, wobei eine Größe einer Eingabeschicht durch eine Anzahl von zweiten Merkmalen des datenreduzierten zweiten Datensatzes gegeben ist, und wobei eine Größe einer Ausgabeschicht durch eine Anzahl von Klassen gegeben ist.

Der zweite Algorithmus maschinellen Lernens ist ein nichtlinearer Klassifikator in Form des künstlichen neuronalen Netzes und übernimmt in vorteilhafter Weise das Schätzen einer Szenarienkategorie. Dabei dient die Reduktion der Rohdaten als Eingabe und die Kategorie als Ausgabe.

Gemäß einer weiteren bevorzugten Weiterbildung der Erfindung ist vorgesehen, dass eine Größe der Eingabeschicht des künstlichen neuronalen Netzes identisch zu einer Größe der Ausgabeschicht des künstlichen neuronalen Netzes ist.

Die Größe der Eingangsschicht bzw. Eingabeschicht ist durch die Merkmale der reduzierten Sensordaten gegeben. Die Größe der Ausgabeschicht ist durch die Anzahl der verfügbaren Szenarienkategorien definiert. Hier kommt eine mehrklassige Klassifikation zur Anwendung, bei der das neuronale Netz für jede Szenarienkategorie eine Wahrscheinlichkeit berechnet und die Kategorie mit der höchsten Wahrscheinlichkeit als Prognose wählt.

Gemäß einer weiteren bevorzugten Weiterbildung der Erfindung ist vorgesehen, dass eine Anzahl versteckter Schichten des künstlichen neuronalen Netzes geringer als die Größe der Eingabeschicht des künstlichen neuronalen Netzes und die Größe der Ausgabeschicht des künstlichen neuronalen Netzes ist.

Im Resultat ist es ausreichend, das schätzende neuronale Netz mit deutlich weniger Eingabedaten und in der Folge deutlich weniger versteckten Neuronen in den versteckten Schichten auszustatten, was den Trainingsaufwand hinsichtlich der benötigten Rechenleistung signifikant verringert.

Da die Informationen korreliert sind, kann das Netz dennoch darauf trainiert werden, eine Szenarienkategorie vorherzusagen, ähnlich einem Schätzer, der dies für ein fertiges Szenario festlegt.

Im Ergebnis kann bereits vor der Anwendung einer Szenario- bzw. Szenariengenerierung aus Messdaten vorhergesagt werden, welche Kategorie das Szenario haben wird, und basierend auf dieser Entscheidung kann die Anwendung der Szenariogenerierung aus Messdaten und damit ein Aufwand an Rechenzeit beurteilt werden.

Gemäß einer weiteren bevorzugten Weiterbildung der Erfindung ist vorgesehen, dass der zweite Algorithmus maschinellen Lernens eine mehrklassige Klassifikation durchführt, bei welcher für jede Klasse eine Wahrscheinlichkeit berechnet und die Klasse mit der höchsten Wahrscheinlichkeit als Prognose selektiert wird. Somit kann in vorteilhafter Weise eine akkurate Klassifikation jeweiliger in den Datensätzen enthaltenen Szenarien ermöglicht werden.

Gemäß einer weiteren bevorzugten Weiterbildung der Erfindung ist vorgesehen, dass auf Basis der selektierten, die Fahrzeugaktion repräsentierenden Klasse ein, ein logisches Szenario aufweisender vierter Datensatz erzeugt wird. Somit kann das logische Szenario in vorteilhafter Weise zielgerichtet und mit reduziertem Rechenaufwand erzeugt werden.

Gemäß einer weiteren bevorzugten Weiterbildung der Erfindung ist vorgesehen, dass die Mehrzahl von die Fahrzeugaktion repräsentierende Klassen zumindest einen Wert eines Beschleunigungsvorgangs, eines Bremsvorgangs, eines Richtungs- und/oder Fahrspurwechsels, einer Fahrt mit konstanter Geschwindigkeit des Ego-Fahrzeugs, einer Fahrspur ID und/oder einer zeit- oder ortsbezogenen Bedingung zum Ausführen einer Fahrzeugaktion umfasst.

Jeweilige, eine Fahrzeugaktion repräsentierende Klassen können ferner beispielsweise folgende sein: Ein Folgeverhalten von Fahrzeugen, wobei das vorausfahrende Fahrzeug stark abbremst, ein knappes Einscheren eines Fahrzeugs vor einem andern Fahrzeug, ein Auffahren auf eine größere Straße mit fließendem Verkehr, ein Abbiegen eines Fahrzeugs an einer Kreuzung, wobei sich der Weg mit dem eines andern Fahrzeugs kreuzt, ein Abbiegen eines Fahrzeugs an einer Kreuzung und Interaktion mit einem Fußgänger, der die Straße quert, ein Fahren entlang einer Straße, die ein Fußgänger quert, ein Fahren entlang einer Straße auf der ein Fußgänger in/gegen die Fahrtrichtung läuft, ein Fahren entlang einer Straße auf der ein Fahrradfahrer in/gegen die Fahrtrichtung fährt und/oder ein Ausweichen eines Hindernisses auf der Straße.

Gemäß einer weiteren bevorzugten Weiterbildung der Erfindung ist vorgesehen, dass der erste Algorithmus, insbesondere das multivariate Datenanalyseverfahren, zum Transformieren des ersten Datensatzes von Sensordaten in einen datenreduzierten zweiten Datensatz von Sensordaten, ein Standardisieren des ersten Datensatzes von Sensordaten einer durch die Mehrzahl fahrzeugseitiger Umfelderkennungsensoren erfassten Fahrt des Ego-Fahrzeugs, ein Berechnen einer Kovarianzmatrix aus dem standardisierten ersten Datensatz, ein Bestimmen von Hauptkomponenten darstellenden Eigenvektoren, und ein Erstellen einer Matrix aus den bestimmten Eigenvektoren zum Bereitstellen eines datenreduzierten zweiten Datensatzes umfasst.

Somit kann in vorteilhafter Weise ein multivariates Datenanalyseverfahren zur Rohdatenreduktion der Sensordaten bereitgestellt werden.

Die hierin beschriebenen Merkmale des Verfahrens zur Klassifikation von Szenarien eines virtuellen Tests, sind ebenso auf das System zur Klassifikation von Szenarien eines virtuellen Tests und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines computerimplementierten Verfahrens zur Klassifikation von Szenarien eines virtuellen Tests gemäß einer bevorzugten Ausführungsform der Erfindung;
- Fig.2: ein Ablaufdiagramm eines computerimplementierten Verfahrens zum Bereitstellen eines trainierten zweiten Algorithmus maschinellen Lernens zur Klassifikation von Szenarien eines virtuellen Tests gemäß der bevorzugten Ausführungsform der Erfindung; und
- Fig.3: eine schematische Darstellung eines Systems zur Klassifikation von Szenarien eines virtuellen Tests gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

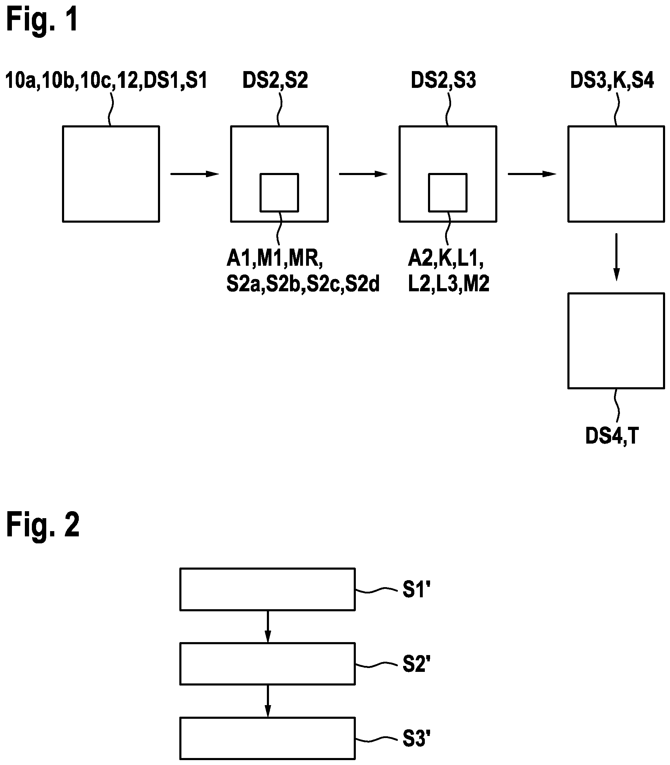

Das in Fig. 1 gezeigte Verfahren zur Klassifikation von Szenarien eines virtuellen Tests T umfasst ein Bereitstellen S1 eines ersten Datensatzes DS1 von Sensordaten einer durch eine Mehrzahl fahrzeugseitiger Umfelderkennungsensoren 10a, 10b, 10c erfassten Fahrt eines Ego-Fahrzeugs 12.

Des Weiteren umfasst das Verfahren ein Transformieren S2 des ersten Datensatzes DS1 von Sensordaten durch einen ersten Algorithmus A1, insbesondere ein multivariates Datenanalyseverfahren, in einen datenreduzierten zweiten Datensatz DS2 von Sensordaten.

Das Verfahren umfasst darüber hinaus ein Anwenden S3 eines zweiten Algorithmus A2 maschinellen Lernens auf den datenreduzierten zweiten Datensatz DS2 von Sensordaten zur Klassifikation von durch den zweiten Datensatz DS2 umfassten Szenarien und ein Ausgeben S4 eines, eine Mehrzahl von eine Fahrzeugaktion repräsentierende Klassen K aufweisenden dritten Datensatzes DS3.

Die Mehrzahl fahrzeugseitiger Umfelderkennungsensoren 10a, 10b, 10c weisen ein im Wesentlichen abschnittsweise gleiches Sichtfeld auf. Ein Datensatz eines ersten Umfelderkennungsensors 10a, ein Datensatz eines zweiten Umfelderkennungsensors 10b und ein Datensatz eines dritten Umfelderkennungsensors 10c umfassen dabei zumindest ein selbes Objekt.

Der erste Umfelderkennungsensor 10a ist durch einen Radarsensor, der zweite Umfelderkennungsensor 10b durch einen LiDAR-Sensor und der dritte Umfelderkennungsensor 10c durch einen Kamerasensor ausgebildet.

Der erste Algorithmus A1 führt vorzugsweise ein Hauptkomponentenanalyseverfahren durch. Alternativ kann der erste Algorithmus A1 beispielsweise ein Faktorenanalyseverfahren und/oder ein Korrespondenzanalyseverfahren durchführen.

Das Hauptkomponentenanalyseverfahren fasst korrelierende erste Merkmale M1 der Mehrzahl fahrzeugseitiger Umfelderkennungsensoren 10a, 10b, 10c als Linearkombination aus Werten der Mehrzahl fahrzeugseitiger Umfelderkennungsensoren 10a, 10b, 10c zu einem einzelnen, datenreduzierten Merkmal MR zusammen.

Der zweite Algorithmus A2 maschinellen Lernens ist durch ein künstliches neuronales Netz gebildet. Eine Größe einer Eingabeschicht L1 ist dabei durch eine Anzahl von zweiten Merkmalen M2 des datenreduzierten zweiten Datensatzes DS2 gegeben. Eine Größe einer Ausgabeschicht L3 ist ferner durch eine Anzahl von Klassen K gegeben.

Eine Größe der Eingabeschicht L1 des künstlichen neuronalen Netzes ist identisch zu einer Größe der Ausgabeschicht L3 des künstlichen neuronalen Netzes. Eine Anzahl versteckter Schichten L2 des künstlichen neuronalen Netzes ist dabei geringer als die Größe der Eingabeschicht L1 des künstlichen neuronalen Netzes und die Größe der Ausgabeschicht L3 des künstlichen neuronalen Netzes.

Der zweite Algorithmus A2 maschinellen Lernens führt eine mehrklassige Klassifikation durch, bei welcher für jede Klasse K eine Wahrscheinlichkeit berechnet und die Klasse K mit der höchsten Wahrscheinlichkeit als Prognose selektiert wird.

Auf Basis der selektierten, die Fahrzeugaktion repräsentierenden Klasse K wird ein, ein logisches Szenario aufweisender vierter Datensatz DS4 erzeugt.

Die Mehrzahl von die Fahrzeugaktion repräsentierende Klassen K umfasst zumindest einen Wert eines Beschleunigungsvorgangs, eines Bremsvorgangs, eines Richtungs- und/oder Fahrspurwechsels, einer Fahrt mit konstanter Geschwindigkeit des Ego-Fahrzeugs 12, einer Fahrspur ID und/oder einer zeit- oder ortsbezogenen Bedingung zum Ausführen einer Fahrzeugaktion.

Der erste Algorithmus A1, insbesondere das multivariate Datenanalyseverfahren, zum Transformieren des ersten Datensatzes DS1 von Sensordaten in einen datenreduzierten zweiten Datensatz DS2 von Sensordaten umfasst ein Standardisieren S2a des ersten Datensatzes DS1 von Sensordaten einer durch die Mehrzahl fahrzeugseitiger Umfelderkennungsensoren 10a, 10b, 10c erfassten Fahrt des Ego-Fahrzeugs 12.

Ferner umfasst der erste Algorithmus A1 ein Berechnen S2b einer Kovarianzmatrix aus dem standardisierten ersten Datensatz DS1, ein Bestimmen S2c von Hauptkomponenten darstellenden Eigenvektoren, und ein Erstellen S2d einer Matrix aus den bestimmten Eigenvektoren zum Bereitstellen eines datenreduzierten zweiten Datensatzes DS2.

Fig.2 zeugt ein Ablaufdiagramm eines computerimplementierten Verfahrens zum Bereitstellen eines trainierten zweiten Algorithmus A2 maschinellen Lernens zur Klassifikation von Szenarien eines virtuellen Tests T gemäß der bevorzugten Ausführungsform der Erfindung.

Das Verfahren umfasst ein Empfangen S1' eines, auf Basis eines ersten Datensatzes DS1 von Sensordaten einer durch eine Mehrzahl fahrzeugseitiger Umfelderkennungsensoren 10a, 10b, 10c erfassten Fahrt eines Ego-Fahrzeugs 12 durch einen ersten Algorithmus A1, insbesondere ein multivariates Datenanalyseverfahren transformierten, datenreduzierten zweiten Datensatz DS2 von Sensordaten.

Des Weiteren umfasst das Verfahren ein Empfangen S2' eines, eine Mehrzahl von eine Fahrzeugaktion repräsentierende Klassen K aufweisenden dritten Datensatzes DS3 sowie ein Trainieren S3' des zweiten Algorithmus A2 maschinellen Lernens durch einen Optimierungsalgorithmus, welcher einen Extremwert einer Verlustfunktion zur Klassifikation von Szenarien eines virtuellen Tests T berechnet.

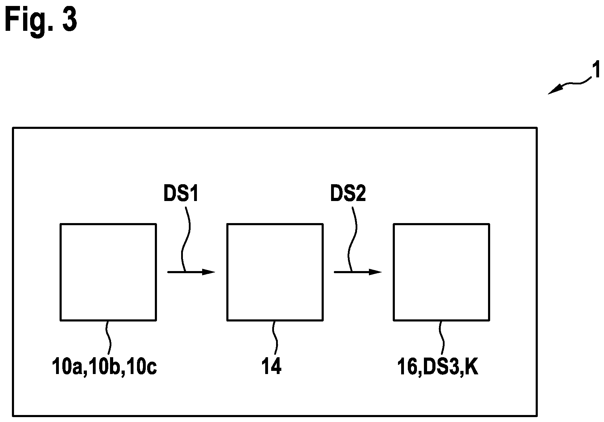

Fig.3 zeigt eine schematische Darstellung eines Systems 1 zur Klassifikation von Szenarien eines virtuellen Tests T gemäß der bevorzugten Ausführungsform der Erfindung.

Das System 1 weist eine Mehrzahl fahrzeugseitiger Umfelderkennungsensoren 10a, 10b, 10c zum Bereitstellen eines ersten Datensatzes DS1 von Sensordaten einer erfassten Fahrt eines Ego-Fahrzeugs 12 auf.

Des Weiteren weist das System 1 erste Mittel 14 zum Transformieren des ersten Datensatzes DS1 von Sensordaten durch einen ersten Algorithmus A1, insbesondere ein multivariates Datenanalyseverfahren, in einen datenreduzierten zweiten Datensatz DS2 von Sensordaten auf.

Das System 1 weist ferner zweite Mittel 16 zum Anwenden eines zweiten Algorithmus A2 maschinellen Lernens auf den datenreduzierten zweiten Datensatz DS2 von Sensordaten zur Klassifikation von durch den zweiten Datensatz DS2 umfassten Szenarien auf, wobei die zweiten Mittel 16 dazu eingerichtet ist, einen, eine Mehrzahl von eine Fahrzeugaktion repräsentierende Klassen K aufweisenden dritten Datensatz DS3 auszugeben.

### Bezugszeichenliste

- 1: System
- 10a: erster Umfelderkennungssensor
- 10b: zweiter Umfelderkennungssensor
- 10c: dritter Umfelderkennungssensor
- 12: Ego-Fahrzeug
- 14: erste Mittel
- 16: zweite Mittel
- A1: erster Algorithmus maschinellen Lernens
- A2: zweiter Algorithmus maschinellen Lernens
- DS1: erster Datensatz
- DS2: zweiter Datensatz
- DS3: dritter Datensatz
- DS4: vierter Datensatz
- K: Klasse(n)
- L1: Eingabeschicht
- L2: versteckte Schichten
- L3: Ausgebeschicht
- M1: erste Merkmale
- M2: zweite Merkmale
- MR: datenreduziertes Merkmal
- S1-S4: Verfahrensschritte
- S1'-S3': Verfahrensschritte
- S2a: Standardisieren
- S2b: Berechnen
- S2c: Bestimmen
- S2d: Erstellen
- T: virtueller Test

## Patentansprüche

1. Computerimplementiertes Verfahren zur Klassifikation von Szenarien eines virtuellen Tests (T), mit den Schritten:
Bereitstellen (S1) eines ersten Datensatzes (DS1) von Sensordaten einer durch eine Mehrzahl fahrzeugseitiger Umfelderkennungsensoren (10a, 10b, 10c) erfassten Fahrt eines Ego-Fahrzeugs (12);
Transformieren (S2) des ersten Datensatzes (DS1) von Sensordaten durch einen ersten Algorithmus (A1), insbesondere ein multivariates Datenanalyseverfahren, in einen datenreduzierten zweiten Datensatz (DS2) von Sensordaten;
Anwenden (S3) eines zweiten Algorithmus (A2) maschinellen Lernens auf den datenreduzierten zweiten Datensatz (DS2) von Sensordaten zur Klassifikation von durch den zweiten Datensatz (DS2) umfassten Szenarien; und
Ausgeben (S4) eines, eine Mehrzahl von eine Fahrzeugaktion repräsentierende Klassen (K) aufweisenden dritten Datensatzes (DS3).

2. Computerimplementiertes Verfahren nach Anspruch 1, wobei die Mehrzahl fahrzeugseitiger Umfelderkennungsensoren (10a, 10b, 10c) ein im Wesentlichen abschnittsweise gleiches Sichtfeld aufweisen, wobei ein Datensatz eines ersten Umfelderkennungsensors (10a), ein Datensatz eines zweiten Umfelderkennungsensors (10b) und ein Datensatz eines dritten Umfelderkennungsensors (10c) zumindest ein selbes Objekt umfassen.

3. Computerimplementiertes Verfahren nach Anspruch 2, wobei der erste Umfelderkennungsensor (10a) durch einen Radarsensor, der zweite Umfelderkennungsensor (10b) durch einen LiDAR-Sensor und der dritte Umfelderkennungsensor (10c) durch einen Kamerasensor ausgebildet sind.

4. Computerimplementiertes Verfahren nach einem der vorhergehenden Ansprüche, wobei der erste Algorithmus (A1) ein Faktorenanalyseverfahren, ein Hauptkomponentenanalyseverfahren und/oder ein Korrespondenzanalyseverfahren durchführt.

5. Computerimplementiertes Verfahren nach Anspruch 4, wobei das Hauptkomponentenanalyseverfahren korrelierende erste Merkmale (M1) der Mehrzahl fahrzeugseitiger Umfelderkennungsensoren (10a, 10b, 10c) als Linearkombination aus Werten der Mehrzahl fahrzeugseitiger Umfelderkennungsensoren (10a, 10b, 10c) zu einem einzelnen, datenreduzierten Merkmal (MR) zusammenfasst.

6. Computerimplementiertes Verfahren nach einem der vorhergehenden Ansprüche, wobei der zweite Algorithmus (A2) maschinellen Lernens durch ein künstliches neuronales Netz gebildet ist, wobei eine Größe einer Eingabeschicht (L1) durch eine Anzahl von zweiten Merkmalen (M2) des datenreduzierten zweiten Datensatzes (DS2) gegeben ist, und wobei eine Größe einer Ausgabeschicht (L3) durch eine Anzahl von Klassen (K) gegeben ist.

7. Computerimplementiertes Verfahren Anspruch 6, wobei eine Größe der Eingabeschicht (L1) des künstlichen neuronalen Netzes identisch zu einer Größe der Ausgabeschicht (L3) des künstlichen neuronalen Netzes ist.

8. Computerimplementiertes Verfahren nach Anspruch 7, wobei eine Anzahl versteckter Schichten (L2) des künstlichen neuronalen Netzes geringer als die Größe der Eingabeschicht (L1) des künstlichen neuronalen Netzes und die Größe der Ausgabeschicht (L3) des künstlichen neuronalen Netzes ist.

9. Computerimplementiertes Verfahren nach einem der vorhergehenden Ansprüche, wobei der zweite Algorithmus (A2) maschinellen Lernens eine mehrklassige Klassifikation durchführt, bei welcher für jede Klasse (K) eine Wahrscheinlichkeit berechnet und die Klasse (K) mit der höchsten Wahrscheinlichkeit als Prognose selektiert wird.

10. Computerimplementiertes Verfahren nach Anspruch 9, wobei auf Basis der selektierten, die Fahrzeugaktion repräsentierenden Klasse (K) ein, ein logisches Szenario aufweisender vierter Datensatz (DS4) erzeugt wird.

11. Computerimplementiertes Verfahren nach einem der vorhergehenden Ansprüche, wobei die Mehrzahl von die Fahrzeugaktion repräsentierende Klassen (K) zumindest einen Wert eines Beschleunigungsvorgangs, eines Bremsvorgangs, eines Richtungs- und/oder Fahrspurwechsels, einer Fahrt mit konstanter Geschwindigkeit des Ego-Fahrzeugs (12), einer Fahrspur ID und/oder einer zeit- oder ortsbezogenen Bedingung zum Ausführen einer Fahrzeugaktion umfasst.

12. Computerimplementiertes Verfahren nach einem der vorhergehenden Ansprüche, wobei der erste Algorithmus (A1), insbesondere das multivariate Datenanalyseverfahren, zum Transformieren des ersten Datensatzes (DS1) von Sensordaten in einen datenreduzierten zweiten Datensatz (DS2) von Sensordaten, ein Standardisieren (S2a) des ersten Datensatzes (DS1) von Sensordaten einer durch die Mehrzahl fahrzeugseitiger Umfelderkennungsensoren (10a, 10b, 10c) erfassten Fahrt des Ego-Fahrzeugs (12), ein Berechnen (S2b) einer Kovarianzmatrix aus dem standardisierten ersten Datensatz (DS1), ein Bestimmen (S2c) von Hauptkomponenten darstellenden Eigenvektoren, und ein Erstellen (S2d) einer Matrix aus den bestimmten Eigenvektoren zum Bereitstellen eines datenreduzierten zweiten Datensatzes (DS2) umfasst.

13. Computerimplementiertes Verfahren zum Bereitstellen eines trainierten zweiten Algorithmus (A2) maschinellen Lernens zur Klassifikation von Szenarien eines virtuellen Tests (T), mit den Schritten:
Empfangen (S1') eines, auf Basis eines ersten Datensatzes (DS1) von Sensordaten einer durch eine Mehrzahl fahrzeugseitiger Umfelderkennungsensoren (10a, 10b, 10c) erfassten Fahrt eines Ego-Fahrzeugs (12) durch einen ersten Algorithmus (A1), insbesondere ein multivariates Datenanalyseverfahren transformierten, datenreduzierten zweiten Datensatz (DS2) von Sensordaten; Empfangen (S2') eines, eine Mehrzahl von eine Fahrzeugaktion repräsentierende Klassen (K) aufweisenden dritten Datensatzes (DS3); und
Trainieren (S3') des zweiten Algorithmus (A2) maschinellen Lernens durch einen Optimierungsalgorithmus, welcher einen Extremwert einer Verlustfunktion zur Klassifikation von Szenarien eines virtuellen Tests (T) berechnet.

14. System (1)zur Klassifikation von Szenarien eines virtuellen Tests (T), aufweisend:
eine Mehrzahl fahrzeugseitiger Umfelderkennungsensoren (10a, 10b, 10c) zum Bereitstellen eines ersten Datensatzes (DS1) von Sensordaten einer erfassten Fahrt eines Ego-Fahrzeugs (12) ;
erste Mittel (14) zum Transformieren des ersten Datensatzes (DS1) von Sensordaten durch einen ersten Algorithmus (A1),insbesondere ein multivariates Datenanalyseverfahren, in einen datenreduzierten zweiten Datensatz (DS2) von Sensordaten;
zweite Mittel (16) zum Anwenden eines zweiten Algorithmus (A2) maschinellen Lernens auf den datenreduzierten zweiten Datensatz (DS2) von Sensordaten zur Klassifikation von durch den zweiten Datensatz (DS2) umfassten Szenarien, wobei die zweiten Mittel (16) dazu eingerichtet ist, einen, eine Mehrzahl von eine Fahrzeugaktion repräsentierende Klassen (K) aufweisenden dritten Datensatz (DS3) auszugeben.

15. Computerprogramm mit Programmcode, um das Verfahren nach einem der Ansprüche 1 bis 12 durchzuführen, wenn das Computerprogramm auf einem Computer ausgeführt wird.
